# EUROPEAN PATENT APPLICATION

(11) **EP 2 700 623 A1**
(43) Date of publication of application: **26.02.2014**
(21) Application number: 12774161.9
(22) Date of filing: 20.04.2012
(51) Int. Cl.: C04B 28/06, C04B 14/04, B28C 5/08

(54) **IMPROVED METHOD FOR THE PRODUCTION OF A CEMENT MORTAR BODY AND UNIT FOR THE PRODUCTION THEREOF**

(30) Priority: 20.04.2011 ES 201130642 P
(71) Applicant: Fradera Pellicer, Carlos, L'Aldosa, La Massana (AD)
(72) Inventor: Fradera Pellicer, Carlos, L'Aldosa, La Massana (AD)
(74) Representative: Curell Suñol S.L.P.
(86) International application number: PCT/ES2012/070265
(87) International publication number: WO 2012/143593

(57) **Abstract**

The invention relates to a method and unit for the production of a cement mortar body (2) molded with a cement mortar. According to the invention, the following elements are introduced into a vertical kneading machine provided with a drain in the flat bottom thereof: an amount of water corresponding to an amount comprised between 29% and 32% by weight of the cement mass, followed by additives and colorants; an amount of aggregate having a rounded surface, a grain-size distribution comprised between 0.1 and 1 mm and a silica content of 99.5%; and an amount of cement having particles in the order of 5 microns comprised between 27% and 37% by weight of the total dry aggregate and cement mass. The kneading operation is continued until a completely homogeneous mass is obtained, with full hydration of the cement, and said mass is poured in a mold.

## Description

### Field of the Invention

The present invention relates to an improved method for the production of a cement mortar body and a unit for carrying out said method. Specifically, the object of the invention is to obtain a body molded with a cement mortar and particularly intended for forming bodies with or without metal reinforcement, which present properties of impermeability, electrical insulation and hardness suitable for specific uses.

### State of the Art

The applicant is proprietor of the international PCT application with publication number W02010116009A1, the object of which is a cement mortar body having specific features and a method for the production thereof, documents JP61227959A and WO8804285A1 both having been mentioned with category A while prosecuting said patent application.

The object of said international PCT application number WO2010116009A1 is to obtain a cement mortar body with the features that are sought with the present application, which are defined below:
a. -- Consisting of an aggregate with a silica content in the order of 99.5% which is formed by particles having a rounded surface and a grain-size distribution comprised between 0.1 and 1 mm, with gaps in the clustering of the particles themselves being occupied by an ettringite binder derived from the hydration of cement particles having a grain-size distribution in the order of around 5 microns and by the fully hydrated cement particles themselves.
b. -- Having a compressive strength in the order of the following values: at 8 hours it is in the order of 350 kg/cm²; at 24 hours it is in the order of 500 kg/m²; at 48 hours it is in the order of 575 kg/m²; at 7 days it is in the order of 750 kg/m² and at 28 days it is in the order of 1000 kg/m².
c. -- Having 100% impermeability, making it impermeable and highly electrically insulating.

There are patent applications which seek to obtain dense mortars, but they do not have the aforementioned impermeability and hardness features. The object of documents ES2257682T3 and ES2299899T3 is mortars with qualities different from those of the mortar object of the present invention.

The applicant is basically unaware of any patent applications, besides its own application W02010116009A1, consisting of an improvement of the foregoing, that have the object of obtaining a mortar with absolute impermeability, electrical insulation and extreme hardness.

### Summary of the Invention

The object of the invention is an improved method for obtaining a cement mortar body molded with a silica and cement mortar according to a tightly closed and non-porous texture and particularly intended for configuring bodies which, with or without metal reinforcement, have properties of impermeability, compressive strength and hardness suitable for specific uses, which in turn leads to it being provided with extraordinary electrical insulating capacity.

According to the invention, an improved method for the production of a cement mortar body molded with a cement mortar and particularly intended for forming bodies with or without metal reinforcement has been developed, characterized in that, in a vertical kneading machine provided with a drain in the flat bottom thereof, an amount of water is introduced, corresponding to an amount comprised between 29% and 32% by weight of the cement mass, and additives and colorants are added, after which the following elements are incorporated: an amount of aggregate having a rounded surface, a grain-size distribution comprised between 0.1 and 1 mm and a silica content of 99.5%, and an amount of cement having particles in the order of 5 microns comprised between 27% and 37% by weight of the total dry aggregate and cement mass, after which the kneading operation is continued until a completely homogeneous mass is obtained, with full hydration of the cement, and said mass is poured in a mold and kept therein in order to set, the surface of the mentioned mass being in contact with a cover which defines the encapsulation of the mold.

In some embodiments, the kneading of the components of the mortar is carried out in a non-rotational vertical cylindrical body by stirring the components in a stationary point in space of the bottom thereof, without interrupting the stirring process, onto the circulating heterogeneous mixture of the components until a homogenous mixture and full hydration of the cement particles are obtained.

In other embodiments, the kneading of the components of the mortar is carried out in a rotational vertical cylindrical body by stirring the components in a stationary point in space and sequentially, without interrupting the stirring process, onto the circulating heterogeneous mixture of the components which moves according to a closed path that inevitably passes through the stationary point of stirring until a homogenous mixture and full hydration of the cement particles are obtained.

Full hydration of the cement preferably gives rise to the formation of a binder to the aggregate known as ettringite which is chemically made up of tricalcium sulfoaluminate of formula Ca₄ SO₄ (AlO₃)₂ · 30 -32 H₂O.

The setting of the mortar encapsulated in the shaping mold is preferably carried out by means of a thermal input from the group comprising exogenous heating, such as that provided by hot air in means from the group comprising ovens and tunnels, and high-frequency endogenous heating, whether they are considered separately or in their technically possible combinations.

The setting of the material is preferably performed under temperature conditions comprised between 25 and 35°C and humidity in the order of 94%.

Microparticles in the order of one micron and colloidal materials are preferably incorporated in the possible gaps formed between aggregate particles, ettringite binder and cement particles, and nanoparticles are incorporated in the gaps created between aggregate particles, cement particles with ettringite binder and the mentioned microparticles and colloidal materials.

Part of the nanoparticles to be used in the process is preferably formed by nanoparticles with tribological properties that are located in the mold and/or in the encapsulating and calibrating covers, which nanoparticles exert their action on the physical molding and mold releasing operation, whereas another part is formed by nanoparticles acting in the physicochemical development of the setting of the mortar, providing the finished product with a number of properties determined by the type of nanoparticles used.

In some embodiments, the combining of colorants and additives in water in a first stage and the combining of the solid components of the mortar with the former in a second stage immediately after the first stage is carried out under high-frequency vibration performed using means from the group comprising mechanical means, electrical means, electronic means, electromagnetic means and fluidic means, whether considered separately or in their technically possible combinations.

In other embodiments, the combining of colorants and additives in water in a first stage and the combining of the solid components of the mortar in the former in a second stage immediately after the first stage is carried out under a high vacuum formed using means from the group comprising mechanical means, electrical means, electronic means, electromagnetic means and fluidic means, whether considered separately or in their technically possible combinations.

The invention also relates to a unit for carrying out the improved method for the production of a cement mortar body, intended for kneading the products used in said method and the molding operation, characterized in that it consists of a kneading machine having a vertical cylindrical body and a horizontal flat bottom, which may or may not have rotational movement, and which is provided with an outlet port co-planar with said bottom and which has a practicable hermetic closure, said vertical cylindrical body having at least one eccentric stirring shaft and a deflector which directs the mass towards said outlet port, arranged in the center of said vertical cylindrical body, by scraping the inner wall of said vertical cylindrical body, which outlet port is located in the space above a distributing hopper for distributing the mass over the surface of a receiving mold for receiving said mass, the hopper and mold assembly being provided with a relative translational movement with respect to said outlet port which allows distributing the mass over said mold according to a uniform thickness.

Said vertical cylindrical body is preferably provided with means which allow imparting to said vertical cylindrical body a state from the group comprising immobility or rotation about its axis of revolution.

Preferably, said vertical cylindrical body is independently capped by a head incorporating at its base the discharge ports of the conduits for water and additive, cement and aggregate coming from respective metering devices, a pigment introduction port, lighting means and the bases for the cantilevered rotational securing of the main stirring shaft and of a possible secondary stirring shaft, as well as rotating and transmission means between them, and an outer motor that generates the rotation of both stirring shafts.

Said head, independently superimposed on the top open base of said vertical cylindrical body of the kneading machine, preferably has a top closure cover which has a practicable portion at one point of the periphery thereof for accessing the inside of said head.

Said vertical cylindrical body is preferably mounted on a raised footing and located a short distance above a ribbed hopper with an angled cross-section which has the dihedral portion open to release the cement mortar mass.

The opening of said ribbed hopper is preferably located in a plane parallel to the receiving surface of said receiving mold for receiving the cement mortar mass.

Said receiving mold for receiving the cement mortar mass preferably moves horizontally and parallel with respect to the opening of said ribbed hopper, such that the latter does not exceed the limits of the contour of said mold.

In some embodiments, said raised footing of the vertical cylindrical body can include means for rotating said vertical cylindrical body.

In other embodiments in which said vertical cylindrical body is fixed, the head superimposed thereon has complementary means at the top edge of the open base of said vertical cylindrical body to establish a leak-tight seal which allows creating a vacuum level inside said vertical cylindrical body.

Both said main stirring shaft and said secondary stirring shaft preferably mount discs and/or stirring blades, said discs being located in the bottom position at the level of the bottom of said vertical cylindrical body, and said stirring blades being located at various heights.

Said outer motor that generates the rotation of the stirring shafts is preferably controlled by a variable frequency drive.

### Brief Description of the Drawings

To help understand the ideas set forth while at the same time disclosing various constructive details, an embodiment of the present invention is described below in reference to the drawings attached to this specification which, given their primarily illustrative purpose, must be interpreted as not limiting the scope with respect to the extent of the independent claims.
Figure 1 depicts a perspective view part of a cement mortar panel made according to the invention.
Figure 2 schematically depicts a microscopic diagram of a micro-fraction of a cement mortar body from a panel such as that seen in the preceding figure.
Figure 3 schematically depicts a kneading machine arrangement acting in according to the content of claim 2.
Figure 4 schematically depicts the circulating directions of the mass in the stirring and translation zones thereof in the kneading machine of Figure 3.
Figure 5 depicts a partially sectioned perspective view of a preferred embodiment of a unit for the production of a cement mortar panel in which the object of the invention is applied.

### Detailed Description of several Embodiments of the Invention

A preferred embodiment of the unit for the production of a cement mortar body according to the invention, along with the process for obtaining same, which process is also part of the invention as an improved method, are described below.

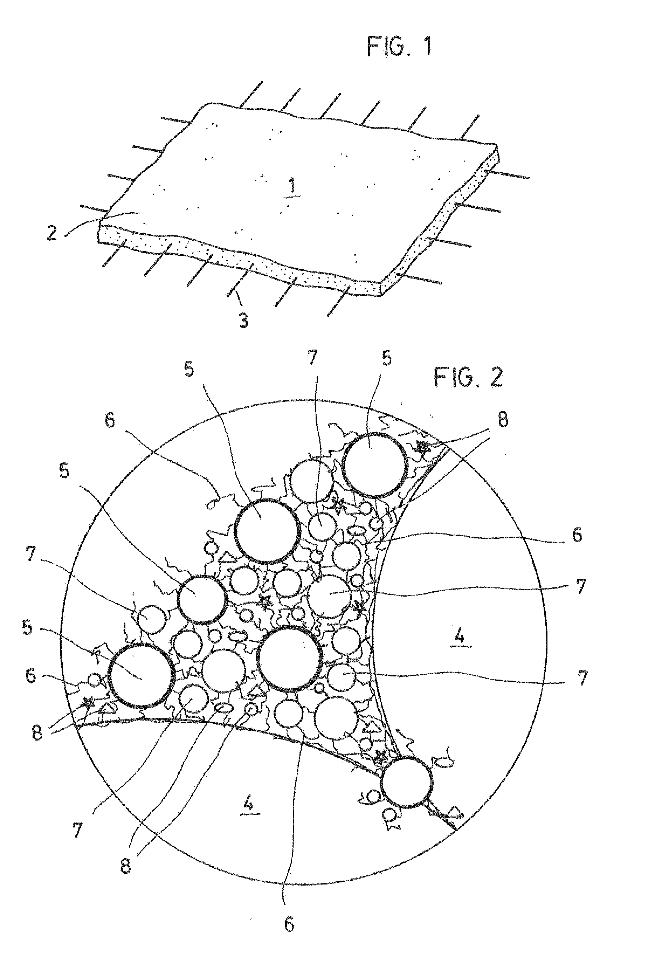

Figure 1 depicts one of the possible configurations of the cement mortar body object of this invention, which consists of a fragment of a prefabricated panel 1 for the construction having the features of comprising a three centimeter thick cement mortar body 2 that is bi-axially reinforced with pre-tensed elements 3.

Figure 2 shows a microscopic diagram of a micro-fraction of the cement mortar body 2 of the prefabricated panel 1. It can be observed that it is made up of the components that have been schematically depicted in the drawing and consists of an aggregate 4 with a silica SiO₂ content of 99.5%, a cement particle 5, ettringite crystals 6, microparticles 7 and nanoparticles 8 of different classes depicted arbitrarily and by way of illustration as stars, circles, ovals and triangles, having no reference numbers.

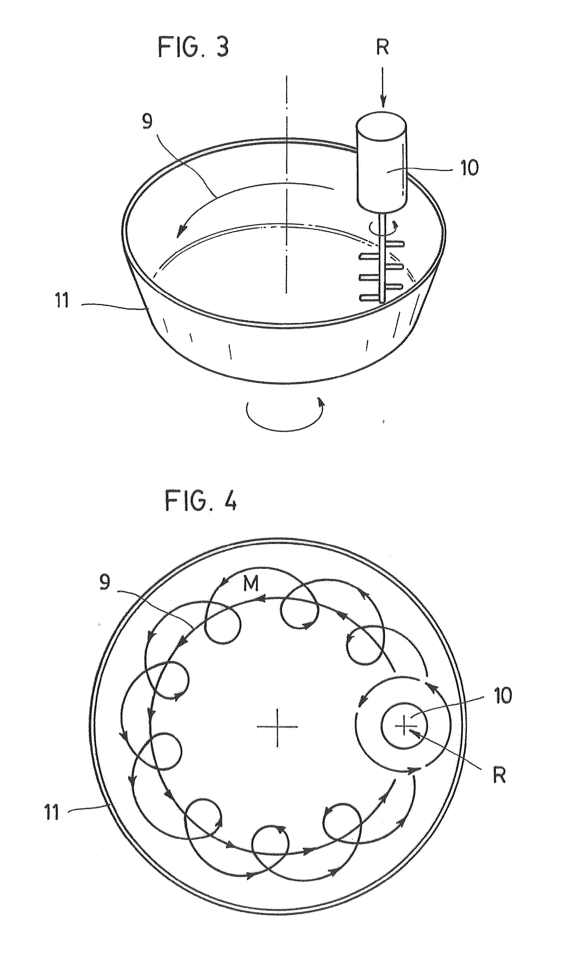

Figure 3 schematically shows the fundamental constitution of a kneading machine which allows obtaining the cement mortar used to make the body 2 of the invention. Figure 4 shows the closed circulation path 9 of the mixture, both at a stationary point of stirring R and in the translation thereof after each stirring carried out according to said closed circulation path 9 of the mixture.

Figure 4 shows that mixing water with pigments and additives incorporated thereto, which were mentioned in the preceding description of Figure 2, in a first stage and adding the aggregate and cement thereto, once they are homogenized, in a second stage immediately after the first stage is carried out by stirring the components at the stationary point of stirring R in space, carried out by the stirrer 10 introduced vertically and eccentrically in a rotating tray 11 having an inverted frustoconical configuration. The mixing is also carried out sequentially, without interrupting the stirring process, on the circulating heterogeneous mixture M of the components which moves according to a closed path that inevitably passes through the stationary point of stirring until a homogenous mixture and full hydration of the cement particles are obtained.

With the preceding mixing and mixing system, high mechanical strengths and impermeability are achieved, which are basically supported on the formulation (grain-size distribution of the aggregate/cement combination, the low water/cement ratio of the mortar (0.30) and the use of highly water-reducing additives and superplasticizers).

During the mixing process, the cement and aggregate contact the water of mixing and form a gel rich in silica, absorbing most of the available water. The gel then agglomerates between the non-hydrated cement particles, coating the mentioned particles in the process. The calcium hydroxide reacts with the outer surface of this gel to form hydrated calcium silicate. This gel is formed in the cavities of the hydrated calcium silicate produced by hydrating the cement particles, producing a very dense structure since it fill up the interstitial spaces remaining between the cement particles (with a grain-size distribution of about 30% less than five microns), and this in turn fills up the interstitial spaces of the aggregate. All this gives the end product the physical properties of strength, impermeability and electrical insulation.

This cement mortar body 2 is fundamentally made up of an aggregate 4 with a silica content in the order of 99.5% which is formed by particles having a rounded surface and a grain-size distribution comprised between 0.1 and 1 mm, with gaps in the clustering of the particles themselves being occupied by an ettringite binder 6 derived from the hydration of cement particles 5 having a grain-size distribution in the order of around 5 microns and by the fully hydrated cement particles 5 themselves.

Nevertheless, the aforementioned cement mortar body 2 can include an indefinite number of additives intended for correctly adjusting the special characteristics of the body 2 mentioned in the preceding paragraph to the use needs thereof. The process described below has been developed according to this premise. As in the preceding case, the cement mortar is made up of an aggregate 4 with a silica content in the order of 99.5%, which is formed by particles having a rounded surface and a grain-size distribution comprised between 0.1 and 1 mm, and has the gaps existing in the clustering of the particles themselves occupied by an ettringite binder 6 derived from the hydration of cement particles 5 having a grain-size distribution in the order of around 5 microns and by the hydrated cement particles 5 themselves. The cement mortar body 2 can incorporate microparticles 7 in the order of one micron and colloidal materials, which are not shown in the drawings, in the possible gaps formed between the aggregate particles 4, the ettringite binder 6 and the cement particles 5, and it can incorporate nanoparticles 8 in the gaps created between the aggregate particles 4, the cement particles 5 with the ettringite binder 6 and the mentioned microparticles 7 and colloidal materials.

The cement mortar body 2, particularly the one comprised in claim 1 and obtained according to the process of claim 5, has 100% impermeability according to tests conducted according to the UNE EN 1015-18 and 1170-6 standards by LGAI Technological Center, S.A., of the UAB Campus and recommendation II 4 RILEM by the Universidad Politécnica de Catalunya. Accordingly, with such impermeability result, extraordinary electrical insulating capacity can be attributed to said cement mortar body 2.

Full hydration of the cement particles 5 gives rise to the formation of a binder to the aggregate known as ettringite 6 which is chemically made up of tricalcium sulfoaluminate of formula Ca₄ SO₄ (AlO₃)₂ · 30 -32 H₂O.

The setting of the cement mortar in the shaping mold is performed under encapsulation conditions at a temperature comprised between 25 and 35°C and humidity in the order of 94%, and by means of a thermal input from the group comprising exogenous heating, such as that provided by hot air in means from the group comprising ovens and tunnels, and high-frequency endogenous heating, whether they are considered separately or in their technically possible combinations.

The encapsulation process consists of closing the mold by means of a cover plate once the mortar is poured and distributed therein such that two actions are performed in the same process. The first action consists of placing the plugs or bushings that will be used to handle and fix the cement mortar body or panel to the structure of application, whether it is a building or another structure, by means of the corresponding anchoring. The second action consists of closing or encapsulating the mortar mass deposited in the mold by means of said cover plate so that during the setting process this mass retains enough humidity to prevent cracks and to obtain optimal properties when the cement mortar body is extracted.

As suggested and observed in Figure 2, microparticles 7 in the order of one micron and colloidal materials can optionally be incorporated in the possible gaps formed between the aggregate particles 4, the ettringite binder 6 and the cement particles 5, and nanoparticles 8 can optionally be incorporated in the gaps created between the aggregate particles 4, the cement particles 5 with the ettringite binder 6 and the mentioned microparticles 7 and colloidal materials.

Part of the nanoparticles 8 to be used in the process is formed by nanoparticles with tribological properties that are located in the mold and/or in the encapsulating and calibrating covers, which nanoparticles exert their action on the physical molding and mold releasing operation, whereas another part is formed by nanoparticles acting in the physicochemical development of the setting of the mortar, providing the finished product with a number of properties determined by the type of nanoparticles used.

The mixing of colorants and additives in the water in a first stage and the mixing of the solid components of the mortar with the former in a second stage, immediately after the first stage, is carried out under high-frequency vibration performed using means from the group comprising mechanical means, electrical means, electronic means, electromagnetic means and fluidic means, whether considered separately or in their technically possible combinations. The mixing of colorants and additives in the water in a first stage and the mixing of the solid components of the mortar in the former in a second stage, immediately after the first stage, is carried out under a high vacuum formed using means from the group comprising mechanical means, electrical means, electronic means, electromagnetic means and fluidic means, whether considered separately or in their technically possible combinations.

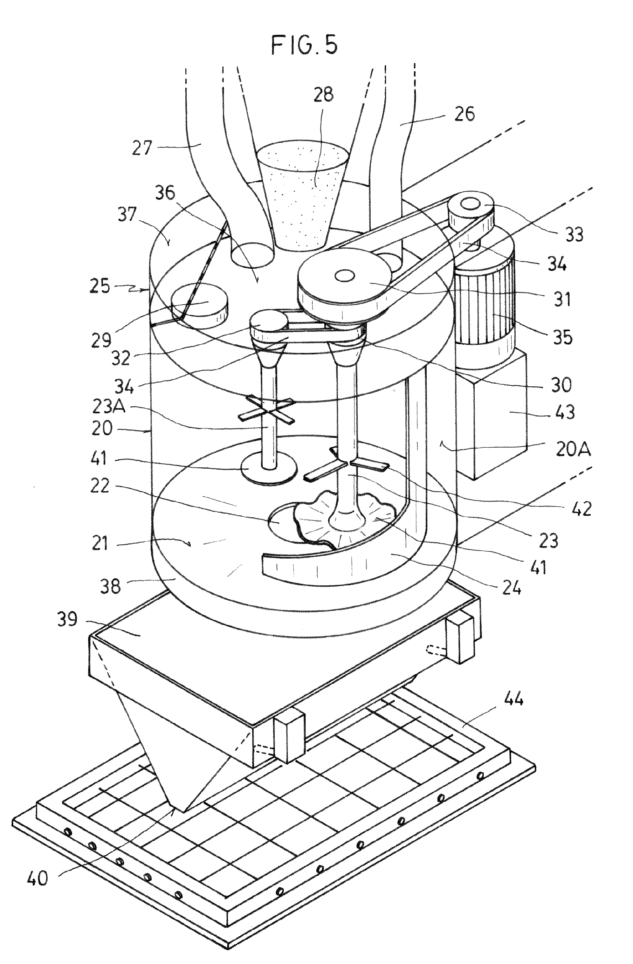

Figure 5 shows a possible unit for the production of a cement mortar body comprising the kneading means for kneading the products used according to the present improved method, the delivery means for delivering the homogenous mass to the mold and the functional arrangement thereof.

The kneading means are made up of a kneading machine configured as a non-rotational vertical cylindrical body 20 having a horizontal flat bottom 21 which may or may not have rotational movement about a virtual vertical axis, and which is provided with an outlet port 22 co-planar with said flat bottom 21 having a practicable hermetic closure. The vertical cylindrical body 20 is provided with at least one eccentric stirring shaft 23 and a deflector 24 which directs the mass towards the outlet port 22 arranged in the center thereof by scraping the inner wall 20A of the cylindrical body 20, which outlet port 22 is located above the surface of a receiving mold 44 for receiving the mass which is provided with a translational movement which allows distributing the mass over the surface of said receiving mold 44 according to a uniform thickness.

The kneading of the components of the mortar in the vertical cylindrical body 20, if said body is provided with rotational movement, is performed as explained above with respect to Figures 3 and 4, i.e., it is carried out by stirring the components at a stationary point in space and sequentially, without interrupting the stirring process, onto the circulating heterogeneous mixture of the components which moves according to a closed path that inevitably passes through the stationary point of stirring until a homogenous mixture and full hydration of the cement particles are obtained.

The vertical cylindrical body 20 is provided with means which allow, in each case of a possible production of the cement mortar mass, imparting to the mentioned vertical cylindrical body 20 a state from the group comprising immobility or rotation about its axis of revolution.

The vertical cylindrical body 20 is independently capped by a head 25 incorporating at its base 25A the discharge ports of the water and additive conduit 26, cement conduit 27 and aggregate conduit 28 coming from the respective metering devices, an auxiliary pigment introduction port 29 and lighting means and the bases 30 for the cantilevered rotational securing of the main stirring shaft 23 and of a possible secondary stirring shaft 23A, as well as rotating means made up of pulleys 31, 32 and 33, rotation transmission means made up of belts 34 between said rotation means and drive means made up of an outer motor 35 that generates the rotation of both shafts 23, 23A.

The head 25, independently superimposed on the top open base of the vertical cylindrical body 20 of the kneading machine, has a top closure cover 36 which has a practicable portion 37 at one point of the periphery thereof for accessing the inside of the head 25.

The vertical cylindrical body 20 is mounted on a raised footing 38 located a short distance above a ribbed hopper 39 with an angled cross-section which has the dihedral portion open at an opening 40 to release the cement mortar mass, which is located in a plane parallel to the surface of the receiving mold 44 for receiving the cement mortar mass.

The receiving mold 44 for receiving the cement mortar mass moves horizontally and parallel with respect to the opening 40 of the hopper, such that the latter does not exceed the limits of the contour of the mold.

The raised footing 38 of the vertical cylindrical body 20 can include means for rotating said vertical cylindrical body.

If the vertical cylindrical body 20 is fixed, the head 25 superimposed thereon has complementary means provided at the top edge of the open base of the vertical cylindrical body 20 to establish a leak-tight seal which allows creating a controlled atmosphere or vacuum level inside said vertical cylindrical body 20.

The main stirring shaft 23 and the secondary stirring shaft 23A mount discs 41 and/or stirring blades 42, the discs 41 being located in the bottom position at the level of the bottom of the vertical cylindrical body and the blades 42 at various heights.

The motor 35 for operating the stirring shafts 23 and 23A is controlled by a variable frequency drive 43.

## Claims

1. An improved method for the production of a cement mortar body (2) molded with a cement mortar and particularly intended for forming bodies with or without metal reinforcement, **characterized in that**, in a vertical kneading machine provided with a drain in the flat bottom thereof, an amount of water in introduced, corresponding to an amount comprised between 29% and 32% by weight of the cement mass, and additives and colorants are added, after which the following elements are incorporated: an amount of aggregate having a rounded surface, a grain-size distribution comprised between 0.1 and 1 mm and a silica content of 99.5%, and an amount of cement having particles in the order of 5 microns comprised between 27% and 37% by weight of the total dry aggregate and cement mass, after which the kneading operation is continued until a completely homogeneous mass is obtained, with full hydration of the cement, and said mass is poured in a mold and kept therein in order to set, the surface of the mentioned mass being in contact with a cover which defines the encapsulation of the mold.

2. The method according to the preceding claim 1, **characterized in that** the kneading of the components of the mortar is carried out in a non-rotational vertical cylindrical body (20) by stirring the components in a stationary point in space of the bottom (21) thereof, without interrupting the stirring process, onto the circulating heterogeneous mixture of the components until a homogenous mixture and full hydration of the cement particles are obtained.

3. The method according to claim 1, **characterized in that** the kneading of the components of the mortar is carried out in a rotational vertical cylindrical body by stirring the components in a stationary point in space and sequentially, without interrupting the stirring process, onto the circulating heterogeneous mixture of the components which moves according to a closed path that inevitably passes through the stationary point of stirring until a homogenous mixture and full hydration of the cement particles are obtained.

4. The method according to any of claims 1 to 3, **characterized in that** full hydration of the cement gives rise to the formation of a binder to the aggregate known as ettringite which is chemically made up of tricalcium sulfoaluminate of formula Ca₄ SO₄ (AlO₃)₂ · 30 -32 H₂O.

5. The method according to any of claims 1 to 4, **characterized in that** the setting of the mortar encapsulated in the shaping mold is carried out by means of a thermal input from the group comprising exogenous heating, such as that provided by hot air in means from the group comprising ovens and tunnels, and high-frequency endogenous heating, whether they are considered separately or in their technically possible combinations.

6. The method according to any of claims 1 to 5, **characterized in that** the setting of the material is performed under temperature conditions comprised between 25 and 35°C and humidity in the order of 94%.

7. The method according to any of claims 1 to 6, **characterized in that** microparticles in the order of one micron and colloidal materials are incorporated in the possible gaps formed between aggregate particles, ettringite binder and cement particles, and nanoparticles are incorporated in the gaps created between aggregate particles, cement particles with ettringite binder and the mentioned microparticles and colloidal materials.

8. The method according to claim 7, **characterized in that** part of the nanoparticles to be used in the process is formed by nanoparticles with tribological properties that are located in the mold and/or in the encapsulating and calibrating covers, which nanoparticles exert their action on the physical molding and mold releasing operation, whereas another part is formed by nanoparticles acting in the physicochemical development of the setting of the mortar, providing the finished product with a number of properties determined by the type of nanoparticles used.

9. The method according to any of claims 1 to 8, **characterized in that** the mixing of colorants and additives in the water in a first stage and the mixing of the solid components of the mortar with the former in a second stage, immediately after the first stage, is carried out under high-frequency vibration performed using means from the group comprising mechanical means, electrical means, electronic means, electromagnetic means and fluidic means, whether considered separately or in their technically possible combinations.

10. The method according to any of claims 1 to 8, **characterized in that** the mixing of colorants and additives in the water in a first stage and the mixing of the solid components of the mortar in the former in a second stage, immediately after the first stage, is carried out under a high vacuum formed using means from the group comprising mechanical means, electrical means, electronic means, electromagnetic means and fluidic means, whether considered separately or in their technically possible combinations.

11. A unit for carrying out the method according to claim 1, intended for kneading the products used in said method for the production of a cement mortar body and the molding operation for same, **characterized in that** it consists of a kneading machine having a vertical cylindrical body (20) and a horizontal flat bottom (21), which may or may not have rotational movement, and which is provided with an outlet port (22) co-planar with said bottom (21) and has a practicable hermetic closure, said vertical cylindrical body (20) being provided with at least one eccentric stirring shaft (23) and a deflector (24) which directs the mass towards said outlet port (22), arranged in the center of said vertical cylindrical body (20), by scraping the inner wall (20A) of said vertical cylindrical body (20), which outlet port (22) is located in the space above a distributing hopper (39) for distributing the mass over the surface of a receiving mold (44) for receiving said mass, the hopper (39) and mold (44) assembly being provided with a relative translational movement with respect to said outlet port (22) which allows distributing the mass over said mold (44) according to a uniform thickness.

12. The unit according to claim 11, **characterized in that** said vertical cylindrical body (20) is provided with means which allow imparting to said vertical cylindrical body (20) a state from the group comprising immobility or rotation about its axis of revolution.

13. The unit according to claim 11, **characterized in that** said vertical cylindrical body (20) is independently capped by a head (25) incorporating at its base the discharge ports of the water and additive conduit (26), cement conduit (27) and aggregate conduit (28) coming from the respective metering devices, a pigment introduction port, lighting means and the bases for the cantilevered rotational securing of the main stirring shaft (23) and of a possible secondary stirring shaft (23A), as well as rotating and transmission means between them, and an outer motor (35) that generates the rotation of both stirring shafts (23, 23A).

14. The unit according to claim 13, **characterized in that** said head (25), independently superimposed on the top open base of said vertical cylindrical body (20) of the kneading machine, has a top closure cover (36) which has a practicable portion (37) at one point of the periphery thereof for accessing the inside of said head (25).

15. The unit according to claim 11, **characterized in that** said vertical cylindrical body (20) is mounted on a raised footing (38) and located a short distance above a ribbed hopper (39) with an angled cross-section which has the dihedral portion open to release the cement mortar mass.

16. The unit according to claim 15, **characterized in that** the opening of said ribbed hopper (39) is located in a plane parallel to the receiving surface of said receiving mold (44) for receiving the cement mortar mass.

17. The unit according to claim 16, **characterized in that** said receiving mold (44) for receiving the cement mortar mass moves horizontally and parallel with respect to the opening of said ribbed hopper (39), such that the latter does not exceed the limits of the contour of said mold (44).

18. The unit according to claim 16, **characterized in that** said raised footing (38) of the vertical cylindrical body (20) can include means for rotating said vertical cylindrical body (20).

19. The unit according to claim 14, **characterized in that** if said vertical cylindrical body (20) is fixed, the head (25) superimposed thereon has complementary means at the top edge of the open base of said vertical cylindrical body (20) to establish a leak-tight seal which allows creating a vacuum level inside said vertical cylindrical body (20).

20. The unit according to claim 13, **characterized in that** both said main stirring shaft (23) and said secondary stirring shaft (23A) mount discs (41) and/or stirring blades (42), said discs (41) being located in the bottom position at the level of the bottom (21) of said vertical cylindrical body (20), and said stirring blades (42) being located at various heights.

21. The unit according to claim 13, **characterized in that** said outer motor (35) that generates the rotation of the stirring shafts (23, 23A) is controlled by a variable frequency drive (43).
